# DEMANDE DE BREVET EUROPEEN

(11) **EP 1 477 215 A1**
(43) Date de publication de la demande: **17.11.2004**
(21) Numéro de dépôt: 04291230.3
(22) Date de dépôt: 13.05.2004
(51) Int. Cl.: B01D 29/21

(54) **Cartouche filtrante pour filtre à liquide de moteur à combustion interne et filtre comprenant une telle cartouche filtrante**

(30) Priorité: 15.05.2003 FR 0305822
(71) Demandeur: Filtrauto, 78286 Guyancourt Cedex (FR)
(72) Inventeur: Rouxel, Bernard, 78310 Maurepas (FR); Hailly, Stéphane, 92130 Issy Les Moulineaux (FR)
(74) Mandataire: Garel, Régis

(57) **Abrégé**

Cartouche filtrante pour filtre à liquide chaud de moteur à combustion interne, comprenant un premier flasque (23) pourvu de moyens d'étanchéité, les moyens d'étanchéité comprennent des premier et deuxième bourrelets annulaires (23a, 23b) qui sont disposés concentriquement l'un par rapport à l'autre, et les premier et deuxième bourrelets (23a, 23b) sont réalisés d'une seule pièce avec le premier flasque (23) qui est réalisé à partir d'une matière thermoplastique adaptée pour se déformer sensiblement sous contrainte à partir d'une température comprise entre 50 et 150°C.

## Description

La présente invention se rapporte aux cartouches filtrantes pour filtres à liquide de moteur à combustion interne et aux filtres comprenant de telles cartouches filtrantes.

Plus particulièrement, l'invention concerne une cartouche filtrante pour filtre à liquide chaud de moteur à combustion interne, la cartouche filtrante comprenant un élément filtrant annulaire poreux qui délimite un espace intérieur creux et qui s'étend selon un axe central entre deux faces d'extrémité reliées de façon étanche respectivement à des premier et deuxième flasques d'extrémité, au moins le premier flasque présentant, d'une part, une ouverture centrale qui communique avec l'espace intérieur creux de l'élément filtrant, et d'autre part, des moyens d'étanchéité qui entourent ladite ouverture centrale et qui sont adaptés pour venir s'appliquer de façon étanche contre une surface rigide.

Le document FR-A-2 745 196 décrit un exemple d'une telle cartouche filtrante qui donne toute satisfaction au plan de son fonctionnement technique.

La présente invention a notamment pour but de perfectionner encore les cartouches filtrantes de ce type, notamment de façon que ledit premier flasque soit mieux compatible avec différents types d'éléments filtrants poreux, et notamment avec les éléments filtrants réalisés en papier ou similaire plissé avec des plis couchés.

A cet effet, selon l'invention, une cartouche filtrante du genre en question est caractérisée en ce que les moyens d'étanchéité comprennent des premier et deuxième bourrelets annulaires qui sont disposés concentriquement l'un par rapport à l'autre, et qui font saillie axialement à l'opposé de l'élément filtrant, et en ce que les premier et deuxième bourrelets sont réalisés d'une seule pièce avec le premier flasque qui est réalisé à partir d'une matière thermoplastique adaptée pour se déformer sensiblement sous contrainte à partir d'une température comprise entre 50 et 150°C.

Grâce à ces dispositions, le premier flasque réalisé à partir d'une matière thermoplastique est compatible notamment avec les papiers filtres ou similaires plissés en formant des plis couchés.

Au cours de l'utilisation du filtre, les premier et deuxième bourrelets du premier flasque d'extrémité se déforment au moins en partie par fluage de façon à s'appliquer exactement contre la surface rigide du filtre en réalisant ainsi une étanchéité parfaite.

Cette étanchéité est obtenue sans avoir à renforcer le premier flasque d'extrémité par un insert de feutre, carton ou autre, alors que de tels inserts auraient été généralement considérés comme indispensables dans l'art antérieur.

Dans des modes de réalisation préférés de la cartouche filtrante, selon l'invention, on peut éventuellement avoir recours en outre à l'une et/ou à l'autre des dispositions suivantes :
- le premier flasque est constitué uniquement d'une résine thermoplastique ;
- un tube ajouré rigide est disposé dans l'espace intérieur creux de l'élément filtrant, ledit tube ajouré s'étendant entre les premier et deuxième flasques d'extrémité ;
- les premier et deuxième bourrelets font saillie sur une hauteur comprise entre 0,5 et 2 mn par rapport au reste du premier flasque d'extrémité ;
- la matière thermoplastique formant le premier flasque d'extrémité est à base de copolyamide ; et
- les premier et deuxième flasques d'extrémité sont réalisés dans le même matériau et le deuxième flasque d'extrémité comprend une ouverture centrale entourée par un bourrelet annulaire formé d'une seule pièce avec ledit deuxième flasque d'extrémité et faisant saillie axialement à l'opposé de l'élément filtrant.

Par ailleurs, l'invention a également pour objet un filtre à liquide chaud pour moteur à combustion interne comportant un boîtier rigide dans lequel est disposée une cartouche filtrante telle que définie ci-dessus. Néanmoins, la cartouche filtrante ainsi utilisée dans le filtre objet de l'invention peut comporter un premier flasque qui est réalisé à partir d'une matière thermoplastique adaptée pour se déformer sous contrainte à partir d'une température qui peut être située à l'extérieur de la plage précédemment définie entre 50 et 150°C.

Selon une autre caractéristique de ce filtre, le boîtier comprend un couvercle amovible et une embase présentant un fond à partir duquel s'étend axialement une paroi latérale sensiblement annulaire fermée par le couvercle, le boîtier comprenant également, d'une part, un orifice d'entrée de liquide et un orifice de sortie de liquide, et d'autre part, un orifice de purge qui débouche sur le fond de l'embase et entre les orifices d'entrée et de sortie de liquide, le premier flasque d'extrémité de la cartouche filtrante étant disposé de sorte que l'orifice de purge soit situé entre les premier et deuxième bourrelets, et le premier flasque d'extrémité étant pressé contre le fond, avec une force élastique suffisante, pour entraîner une déformation au moins partielle des premier et deuxième bourrelets pour assurer une étanchéité entre l'orifice d'entrée de liquide et l'orifice de purge et entre l'orifice de sortie de liquide et l'orifice de purge.

Selon une autre caractéristique de ce filtre, les premier et deuxième bourrelets se déforment au moins partiellement sous contrainte mécanique de la force élastique et sous contrainte thermique à partir d'une température comprise entre 50 et 150°C.

Selon une autre caractéristique du filtre, une portion du fond de l'embase est formée par un obturateur qui s'étend entre une extrémité élargie qui coopère avec le premier flasque d'extrémité de la cartouche filtrante et une deuxième extrémité disposée dans un canal de purge réalisé dans l'embase du filtre, l'obturateur comprenant un conduit d'évacuation interne qui s'entend entre une extrémité qui forme l'orifice de purge et une extrémité qui débouche dans le canal de purge, et dans lequel l'extrémité élargie de l'obturateur comprend au moins un conduit de sortie de liquide qui s'étend entre une extrémité qui forme l'orifice de sortie de liquide et une extrémité qui débouche dans un canal de sortie de liquide réalisé dans l'embase du filtre.

Selon encore une autre caractéristique du filtre, les premier et deuxième flasques d'extrémité sont réalisés dans le même matériau et le deuxième flasque d'extrémité comprend une ouverture centrale entourée par un bourrelet annulaire formé d'une seule pièce avec ledit deuxième flasque d'extrémité et faisant saillie axialement à l'opposé de l'élément filtrant, le bourrelet annulaire du deuxième flasque d'extrémité étant en contact étanche avec une portée annulaire appartenant à un système de clapet de by-pass, lequel système de clapet de by-pass étant pressé élastiquement contre le bourrelet annulaire dudit deuxième flasque d'extrémité de la cartouche filtrante.

D'autres caractéristiques et avantages de l'invention apparaîtront au cours de la description suivante de deux de ses formes de réalisation, données à titre d'exemples non limitatifs, en regard des dessins joints. Sur les dessins :
- la figure 1 est une vue en coupe axiale d'un filtre comprenant une cartouche filtrante selon une première forme de réalisation, le filtre étant en cours d'utilisation,
- la figure 2 est une vue agrandie d'une portion du filtre représentée sur la figure 1 ; et
- la figure 3 est une vue en coupe axiale d'un filtre comprenant une cartouche filtrante selon une deuxième forme de réalisation de l'invention, le filtre étant toujours en cours d'utilisation.

Sur les différentes figures, les mêmes références désignent des éléments identiques ou similaires.

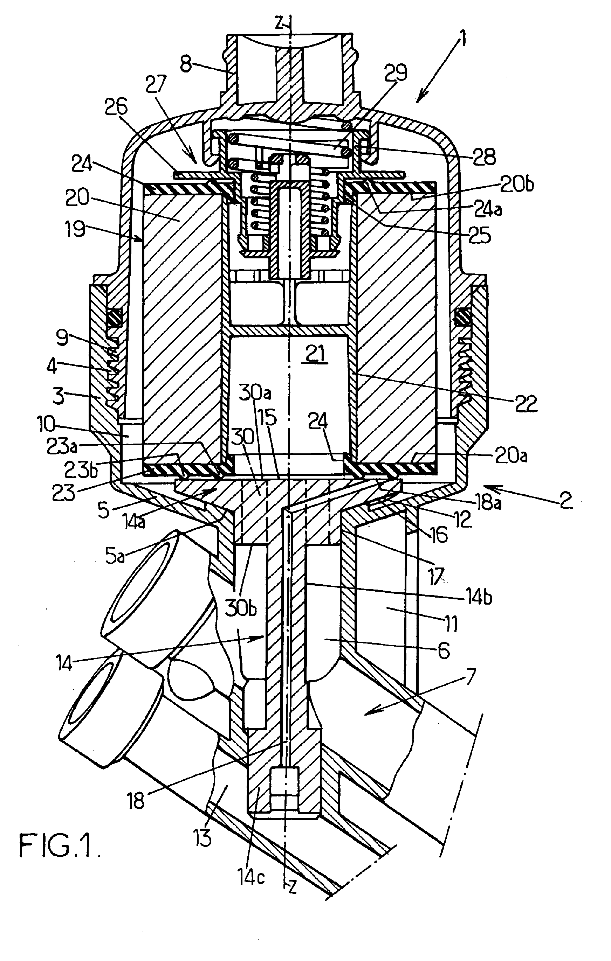

La figure 1 représente un filtre 1 à liquide pour moteur à combustion interne, qui peut constituer en particulier un filtre à huile.

Ce filtre à liquide comporte une embase 2 qui forme une cuve cylindrique centrée sur un axe central Z sensiblement vertical, cette cuve comportant une paroi latérale 3 dotée d'un filetage interne 4, et un fond 5 qui se prolonge vers le bas par un alésage central 6 centré sur l'axe central Z et qui forme en partie un canal de sortie de liquide 7.

A l'extrémité supérieure ouverte de la paroi latérale 3 est vissé un couvercle 8 qui comporte un filetage 9 complémentaire du filetage 4 de la paroi annulaire 3 de la cuve.

Lorsque le couvercle 8 est vissé sur l'embase 2, il délimite avec cette cuve une chambre de filtration 10 fermée, qui communique avec l'extérieur par l'intermédiaire d'un canal d'entrée de liquide 11 pourvu d'un orifice d'entrée de liquide 12 réalisé sur le fond 5, et par l'alésage central 6.

Cet alésage central 6 qui forme en partie le canal de sortie de liquide 7 communique également avec un canal de purge 13.

Afin de séparer le canal de sortie de liquide 7 et le canal de purge 13 l'un de l'autre lors du fonctionnement du filtre, un obturateur 14 est directement disposé dans l'alésage central 6 du fond 5 du filtre 1.

Plus précisément, cet obturateur 14 comprend une extrémité élargie 14a qui présente une surface supérieure sensiblement plane 15 qui se prolonge vers le bas par une surface sensiblement conique 16 qui prend appui de manière étanche sur une portée annulaire 5a saillante et conique réalisée directement sur le fond 5 de l'embase 2. Cette surface sensiblement conique 16 se prolonge également vers le bas par une surface cylindrique 17 en contact avec la paroi interne de l'alésage central 6. L'extrémité élargie 14a de l'obturateur 14 se prolonge également vers le bas par un appendice tubulaire 14b qui s'étend jusqu'à une extrémité 14c logée de manière étanche dans un conduit de séparation de manière à séparer de manière étanche le canal de sortie de liquide 7 et le canal de purge 13.

Cet obturateur 14 comprend également un conduit d'évacuation interne 18 qui s'étend depuis l'extrémité inférieure 14c en communiquant avec le canal de purge 13 jusqu'à une extrémité supérieure formée par un orifice de purge 18a qui débouche directement sur la surface supérieure plane 15 dudit obturateur 14 en communiquant avec la chambre de filtration 10. Par ailleurs, cet obturateur 14 comprend également au moins un conduit de sortie de liquide 30 excentré par rapport à l'axe vertical Z, et qui s'étend entre une extrémité supérieure 30a formant un orifice de sortie de liquide et une extrémité inférieure 30b qui débouche dans l'alésage central 6 formant partiellement le canal de sortie de liquide 7.

La chambre de filtration 10 renferme également une cartouche filtrante 19 qui présente une forme générale cylindrique de révolution autour de l'axe central Z. Cette cartouche filtrante 19 comporte un élément filtrant poreux 20 qui délimite un espace intérieur creux 21 et qui s'étend selon l'axe central Z entre deux faces d'extrémité 20a, 20b.

A titre d'exemple, l'élément filtrant 20 peut comporter une feuille souple poreuse (papier filtre ou similaire) formant une succession de plis dont les arêtes sont parallèles à l'axe Z. Ces plis peuvent se présenter, vus en section dans un plan radial, sous la forme d'ailettes incurvées toutes dans un même sens angulaire, inclinées par rapport à la direction radiale, comme décrit par exemple dans le document WO-A-99/42199.

De plus, l'élément filtrant 20 est soutenu radialement vers l'intérieur par un tube ajouré 22 sensiblement rigide qui s'étend axialement entre les deux faces d'extrémité 20a, 20b dudit élément filtrant 20.

Chacune de ces faces d'extrémité 20a, 20b est fermée de façon étanche respectivement par un premier flasque d'extrémité inférieur 23 et un deuxième flasque d'extrémité supérieur 24 réalisés à partir d'une matière thermoplastique adaptée pour se déformer au moins partiellement sous contrainte mécanique et/ou sous contrainte thermique.

Suivant ce mode de réalisation, ces deux flasques d'extrémité 23 et 24, réalisés uniquement en résine thermoplastique, sont directement surmoulés sur les faces d'extrémité 20a, 20b de l'élément filtrant, de préférence en débordant légèrement de ses faces d'extrémité 20a, 20b radialement vers l'intérieur, et de préférence en pénétrant de quelques millimètres dans l'élément filtrant 20. Dans l'exemple représenté ici, le flasque d'extrémité 23 est appliqué avec étanchéité contre la surface plane supérieure 15 de l'obturateur 14, et il comporte une ouverture centrale 24 de manière à faire communiquer l'espace intérieur creux 21 de l'élément filtrant 19 avec le canal de sortie de liquide 7. Le flasque d'extrémité 24 comprend également une ouverture centrale 25 qui est obturée de façon étanche par contact dudit flasque d'extrémité 24 avec une portée annulaire 26 appartenant à un système de clapet de by-pass 27.

Plus précisément, cette portée annulaire 26 qui s'étend sensiblement perpendiculairement à l'axe central Z appartient à un boîtier rigide 28 du système de clapet de by-pass 27. Ce boîtier rigide 28 est sollicité élastiquement contre le flasque d'extrémité 24 au moyen d'un ressort hélicoïdal 29, ou tout autre moyen élastique, qui prend appui contre la paroi interne du couvercle 8. Ce ressort hélicoïdal 29 permet également d'appliquer simultanément le flasque d'extrémité 23 contre la surface supérieure plane 15 de l'obturateur 14. Ce ressort hélicoïdal 29 peut par exemple appliquer à la cartouche filtrante 19 une force de compression comprise entre 80 et 200 N, notamment de l'ordre de 100 N.

Dans l'exemple représenté, le boîtier rigide 28 du système de clapet de by-pass 27 est en outre retenu sous le couvercle 8 par clipsage, avec un certain jeu axial et en permettant une rotation relative entre le couvercle 8 et le boîtier rigide 28. On notera que, le cas échéant, le flasque supérieur 24 situé au voisinage du couvercle 8 pourrait éventuellement être plein et ne pas comporter de système de clapet by-pass 27.

Le flasque d'extrémité 23 comporte un premier bourrelet annulaire 23a radialement interne et un deuxième bourrelet annulaire 23b radialement externe, ces premier et deuxième bourrelets 23a, 23b étant disposés concentriquement l'un par rapport à l'autre autour de l'axe central Z. Par ailleurs, ces premier et deuxième bourrelets 23a, 23b font saillie axialement à l'opposé de l'élément filtrant 20. Chaque bourrelet 23a, 23b peut par exemple présenter, avant montage de la cartouche filtrante 19 (dans le filtre 1) une hauteur d'environ 0,5 à 3 mn et une largeur comprise entre par exemple 1 et 4 mn. Ce flasque d'extrémité 23 présente par ailleurs une épaisseur de quelques millimètres, par exemple d'environ 1 à 2 millimètres, au-delà de la face d'extrémité 20a de l'élément filtrant 20.

Le flasque d'extrémité supérieur 24 présente, quant à lui, un unique bourrelet 24a qui présente des dimensions sensiblement analogues à celles des premier et deuxième bourrelets 23a, 23b.

Les premier et deuxième bourrelets 23a, 23b sont réalisés d'une seule pièce avec le flasque d'extrémité inférieure 23 réalisé en une résine thermoplastique collante à chaud (résine connue sous le nom de "hot melt" par l'homme du métier). Il peut s'agir par exemple de la résine commercialisée sous la marque "Thermelt 193", vendue par la société française TRL. Plus généralement, on pourra utiliser des résines thermoplastiques à base de copolyamides, présentant de préférence un point de ramollissement compris entre 50 et 250°C (notamment environ 200°C) et adaptées pour fluer ou se déformer sous contrainte à partir d'une température limite comprise entre 50 et 150°C (notamment environ 100°C).

Le flasque d'extrémité inférieure 23 de la cartouche filtrante 19 est disposé de sorte que l'orifice de purge 18 de l'obturateur 14 soit situé entre les premier et deuxième bourrelets annulaires 23a, 23b afin que sous l'action de la compression du ressort 22 et du fluage desdits premier et deuxième bourrelets 23a, 23b l'étanchéité soit assurée, d'une part, entre l'orifice d'entrée de liquide 12 et l'orifice de purge 18a, et d'autre part, entre l'orifice de sortie de liquide 30a et l'orifice de purge 18a.

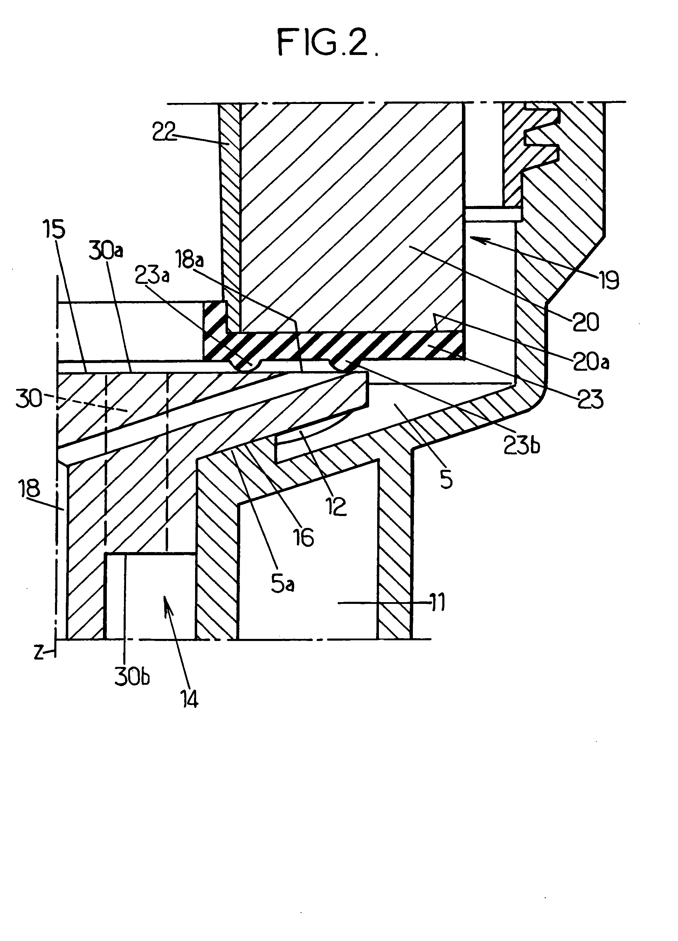

Selon le premier mode de réalisation de l'invention, représenté sur les figures 1 et 2, les premier et deuxième bourrelets 23a, 23b sont dimensionnés et réalisés avec une résine thermoplastique adaptée pour que, lorsque la cartouche filtrante 19 se trouve à l'intérieur du filtre 1, les deux bourrelets 23a, 23b se déforment uniquement en partie en s'aplatissant par effet de fluage du fait de la température relativement élevée du l'huile ou du liquide chauffé par le moteur (classiquement de l'ordre de 100 à 150° dans le cas de l'huile), sous l'action de la compression du ressort 29.

La déformation ou fluage des premier et deuxième bourrelets annulaires 23a, 23b n'est que partielle tout en assurant un contact intime entre ces bourrelets 23a, 23b et la surface plane supérieure 15 de l'obturateur 14, d'où une excellente étanchéité autour de l'orifice de purge 18a et de l'ouverture 24 du flasque d'extrémité 23.

Ainsi, l'étanchéité est obtenue sans avoir à renforcer le premier flasque 23 par un insert de feutre, carton ou autre, alors que de tels inserts auraient été considérés comme indispensables dans l'art antérieur compte tenu du fluage de la résine thermoplastique collante à chaud.

De même, le bourrelet annulaire 24a du flasque d'extrémité supérieure 24 est dimensionné de telle sorte que sa déformation ne soit que partielle pour assurer l'étanchéité entre ledit flasque d'extrémité supérieure 24 et la portée annulaire 26 du boîtier rigide 28 du système de clapet de by-pass 27 sous l'action de la compression du ressort 29.

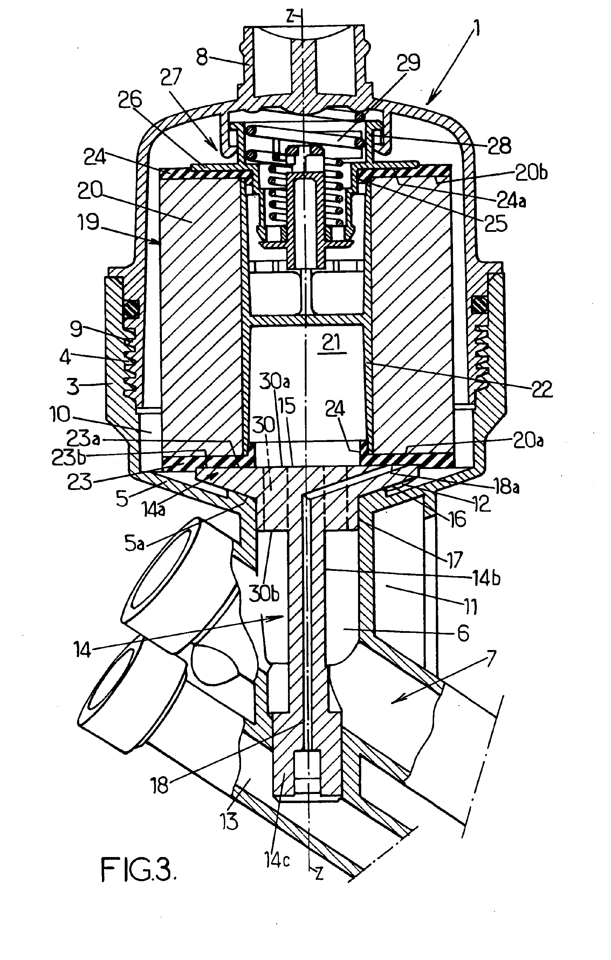

Selon une deuxième forme de réalisation de l'invention représentée sur la figure 3, au moins les premier et deuxième bourrelets 23a, 23b sont dimensionnés, avant montage de la cartouche filtrante 19 dans le filtre 1 et réalisés avec une résine thermoplastique adaptée pour permettre un effet de fluage suffisant pour non seulement écraser totalement les premier et deuxième bourrelets 23a, 23b, mais encore faire pénétrer légèrement la surface plane horizontale 15 correspondante de l'obturateur 14 dans l'épaisseur du flasque d'extrémité 23. Cette pénétration a de préférence lieu sur une profondeur de quelques dixièmes de millimètre, généralement inférieure à un millimètre. Le bourrelet annulaire 24a du flasque d'extrémité 24 peut également être dimensionné et réalisé à partir d'une résine thermoplastique adaptée pour s'écraser complètement par effet de fluage au contact du liquide chaud mais encore pour faire pénétrer légèrement la portée annulaire 26 du boîtier rigide 28 du système de clapet de by-pass 27 dans l'épaisseur du flasque d'extrémité supérieure 24.

On notera, que malgré l'effet de fluage susmentionné, la présence initiale des bourrelets 23a, 23b sur le flasque d'extrémité inférieure 23 continue à produire un effet même après écrasement total desdits bourrelets et pénétration de la surface plane horizontale 15 de l'obturateur 14 dans le flasque 23, en créant deux lignes annulaires ayant une plus forte pression de contact de manière à isoler parfaitement de manière étanche l'orifice de purge 18a par rapport à l'orifice d'entrée de liquide 12 et par rapport à l'espace intérieur creux 21 de l'élément filtrant 20 qui communique avec le canal de sortie de liquide 7 via les conduits de sortie de liquide 19 dudit obturateur 14.

## Revendications

1. Cartouche filtrante pour filtre à liquide chaud de moteur à combustion interne, comprenant un élément filtrant annulaire (20) poreux qui délimite un espace intérieur creux (21) et qui s'étend selon un axe central (Z) entre deux faces d'extrémité (20a, 20b) reliées de façon étanche respectivement à des premier et deuxième flasques d'extrémité (23, 24), au moins le premier flasque (23) présentant, d'une part, une ouverture centrale (24) qui communique avec l'espace intérieur creux (21) de l'élément filtrant (20), et d'autre part, des moyens d'étanchéité (23a, 23b) qui entourent ladite ouverture centrale (24) et qui sont adaptés pour venir s'appliquer de façon étanche contre une surface rigide (15), **caractérisée en ce que** les moyens d'étanchéité comprennent des premier et deuxième bourrelets annulaires (23a, 23b) qui sont disposés concentriquement l'un par rapport à l'autre, et qui font saillie axialement à l'opposé de l'élément filtrant (20), et **en ce que** les premier et deuxième bourrelets (23a, 23b) sont réalisés d'une seule pièce avec le premier flasque (23) qui est réalisé à partir d'une matière thermoplastique adaptée pour se déformer sensiblement sous contrainte à partir d'une température comprise entre 50 et 150°C.

2. Cartouche filtrante selon la revendication 1, dans laquelle le premier flasque (23) est constitué uniquement d'une résine thermoplastique.

3. Cartouche filtrante selon l'une ou l'autre des revendications 1 et 2, dans laquelle un tube ajouré rigide (22) est disposé dans l'espace intérieur creux (21) de l'élément filtrant (20), ledit tube ajouré (22) s'étendant entre les premier et deuxième flasques d'extrémité (23, 24).

4. Cartouche filtrante selon l'une quelconque des revendications précédentes, dans laquelle les premier et deuxième bourrelets (23a, 23b) font saillie sur une hauteur comprise entre 0,5 et 2 mn par rapport au reste du premier flasque d'extrémité (23).

5. Cartouche filtrante selon l'une quelconque des revendications précédentes, dans laquelle la matière thermoplastique formant le premier flasque d'extrémité (23) est à base de copolyamide.

6. Cartouche filtrante selon l'une quelconque des revendications précédentes, dans laquelle les premier et deuxième flasques d'extrémité (23, 24) sont réalisés dans le même matériau et le deuxième flasque d'extrémité (24) comprend une ouverture centrale (25) entourée par un bourrelet annulaire (24a) formé d'une seule pièce avec ledit deuxième flasque d'extrémité (24) et faisant saillie axialement à l'opposé de l'élément filtrant (20).

7. Filtre à liquide chaud pour moteur à combustion interne comportant un boîtier rigide dans lequel est disposée une cartouche filtrante (19) selon l'une quelconque des revendications précédentes.

8. Filtre selon la revendication 7, dans lequel le boîtier comprend un couvercle amovible (8) et une embase (2) présentant un fond (5) à partir duquel s'étend axialement une paroi latérale (3) sensiblement annulaire fermée par le couvercle (8), le boîtier comprenant également, d'une part, un orifice d'entrée de liquide (12) et un orifice de sortie de liquide (30a), et d'autre part, un orifice de purge (18a) qui débouche sur le fond (5) de l'embase et entre les orifices d'entrée (12) et de sortie de liquide (30a), le premier flasque d'extrémité (23) de la cartouche filtrante (19) étant disposé de sorte que l'orifice de purge (18a) soit situé entre les premier et deuxième bourrelets (23a, 23b), et le premier flasque d'extrémité (23) étant pressé contre le fond (5), avec une force élastique suffisante, pour entraîner une déformation au moins partielle des premier et deuxième bourrelets (23a, 23b) pour assurer une étanchéité entre l'orifice d'entrée de liquide (12) et l'orifice de purge (18a) et entre l'orifice de sortie de liquide (30a) et l'orifice de purge (18a).

9. Filtre selon la revendication 8, dans lequel les premier et deuxième bourrelets (23a, 23b) se déforment au moins partiellement sous contrainte mécanique de la force élastique et sous contrainte thermique à partir d'une température comprise entre 50 et 150°C.

10. Filtre selon l'une ou l'autre des revendications 8 et 9, dans lequel une portion du fond (5) de l'embase (2) est formée par un obturateur (14) qui s'étend entre une extrémité élargie (14a) qui coopère avec le premier flasque d'extrémité (23) de la cartouche filtrante (19) et une deuxième extrémité (14c) disposé dans un canal de purge (13) réalisé dans l'embase (2) du filtre, l'obturateur (14) comprenant un conduit d'évacuation interne (18) qui s'entend entre une extrémité (18a) qui forme l'orifice de purge (18a) et une extrémité qui débouche dans le canal de purge (13), et dans lequel l'extrémité élargie (14a) de l'obturateur (14) comprend au moins un conduit de sortie de liquide (30) qui s'étend entre une extrémité qui forme l'orifice de sortie de liquide (30a) et une extrémité (30b) qui débouche dans un canal de sortie de liquide (7) réalisé dans l'embase (2) du filtre.

11. Filtre selon l'une quelconque des revendications 7 à 10, dans lequel les premier et deuxième flasques d'extrémité (23, 24) sont réalisés dans le même matériau et le deuxième flasque d'extrémité (24) comprend une ouverture centrale (25) entourée par un bourrelet annulaire (24a) formé d'une seule pièce avec ledit deuxième flasque d'extrémité (24) et faisant saillie axialement à l'opposé de l'élément filtrant (20), le bourrelet annulaire (24a) du deuxième flasque d'extrémité (24) étant en contact étanche avec une portée annulaire (26) appartenant à un système de clapet de by-pass (27), lequel système de clapet de by-pass (27) étant pressé élastiquement contre le bourrelet annulaire (24a) dudit deuxième flasque d'extrémité (24) de la cartouche filtrante (19).
